# EUROPEAN PATENT SPECIFICATION

(11) **EP 3 361 373 B1**
(45) Date of publication and mention of the grant of the patent: **13.09.2023**
(21) Application number: 18154929.6
(22) Date of filing: 02.02.2018
(51) Int. Cl.: G06F 3/12

(54) **DEVICE AND METHOD FOR PRODUCING IMAGES**
VORRICHTUNG UND VERFAHREN ZUR HERSTELLUNG VON BILDERN
DISPOSITIF ET PROCÉDÉ DE PRODUCTION D'IMAGES

(30) Priority: 13.02.2017 EP 17155910
(43) Date of publication of application: 15.08.2018
(73) Proprietor: Canon Production Printing Holding B.V., 5914 HH Venlo (NL)
(72) Inventor: VAN HORSSEN, Ernst P., 5914 CA Venlo (NL); HOWARD, William E.P.P., 5914 CA Venlo (NL); VAN DE MEULENGRAAF, Dick W.C.P., 5914 CA Venlo (NL); OTTEN, Niek, 5914 CA Venlo (NL); LAUDY, Peter J.M., 5914 CA Venlo (NL)
(74) Representative: Canon Production Printing IP Department

(56) References cited:
- WO-A1-2014/047086
- WO-A1-2015/052223
- US-A1- 2008 278 753
- US-A1- 2016 216 927
- US-A1- 2016 378 584

## Description

### Field of the invention

The present invention is in the field of printing systems having a set of storage holders for housing consumables used for processing images, the consumables of which needs to be refilled as soon as the storage holder is run out of consumables or about to get run out of consumables.

### Background of the invention

Printing systems comprising several devices for producing images on a substrate are common use in offices, copy shops, schools, universities, libraries and so on. Applications of the present invention may be in a print on demand market, a graphics arts market or a packaging market. When such printing devices are running and processing massive orders for applying images on a substrate, the printing devices are using consumable items like ink or toner means, and substrates like paper. For usage of these consumable items, hereinafter called consumables, they are stored in storage holders comprised by the printing device to allow direct access for the printing device that is ordered to produce images on the substrates. During operation these consumables become depleted and for allowing a substantial continuous process, the storage holders need to be refilled as soon as the storage holder is run out of consumables or, rather, about to get run out of consumables. Often, an acoustic or visual signal is prompting an operator being around the printing device having a storage holder which is run out of consumables or, which is about to get run out of consumables. In such circumstance, a refill of the storage holder is depending on whether one operator or one out of a group of operators is paying attention of the storage holder to be refilled. As such, it is a problem to use the printing devices for producing images on a substrate in an efficient way.

US 2016/216927 A1 discloses a communication apparatus that senses an event. Whether a communication partner apparatus exists in the effective range of a communication unit is detected in accordance with the sensed event. When it is detected that the communication partner apparatus exists in the effective range of the communication unit, application information about an application that operates in the communication partner apparatus is obtained. Activation information including identification information indicating an application to be activated in the communication partner apparatus, and execution information to be executed by the application is transmitted to the communication partner apparatus via the communication unit, based on the obtained application information.

US 2008/278753 A1 discloses a display system that can perform suitable procedure display in accordance with the respective operation statuses of a plurality of electronic devices. The display system is formed by connecting an electronic device, a portable terminal, and an information distributing apparatus through a network, and the electronic device has a description tool affixed to the device to indicate the electronic device information of the device and transmits the state information of the device to the information distributing apparatus. The portable terminal acquires the electronic device information of the electronic device from the description tool and transmits it to the information distributing apparatus and displays the returned operation procedure information. The information distributing apparatus registers the received state information of the electronic device and returns the specified procedure display information to the portable terminal based on the electronic device information received from the portable terminal and the registered state information.

WO 2014/047086 A1 discloses a system and method for identifying objects being carried by an operator who is approaching an instrument. The system includes image-, motion-, and depth-capturing sensors that are in communication with the instrument. The captured image, motion, and depth data are compared to data stored in a database and the objects are identified. Once the objects have been identified, an action that corresponds to the identified objects is initiated in the instrument.

US 2016/378584 A1 discloses an information processing system including a storage unit that stores and associates a cause of a failure that has occurred in an electronic device, state information of the electronic device at the time the failure has occurred in the electronic device due to the cause of the failure, and a measure to be implemented in response to the cause of the failure. The information processing system further includes at least one processor that performs an acquisition process for acquiring the state information of the electronic device, and a failure diagnosis process for determining the cause of the failure that has occurred in the electronic device and the measure to be implemented in response to the cause of the failure based on the acquired state information of the electronic device.

WO 2015/052223 A1 discloses an electronic beacon for use in a print system, the print system connected to an at least partially wireless network system and comprising production modules for producing intermediate products and/or end products according to a print job for the print system, wherein the electronic beacon is linkable to the print job via the network system, placeable on top of, attachable to or insertable in a physical intermediate product resulting from the print job or a physical end product resulting from the print job, the electronic beacon comprising activating means for activating and deactivating the electronic beacon, memory means for storing a link to the print job, when the electronic beacon is activated, signaling means for giving an electronic signal when the print job linked to the electronic beacon is selected on a mobile device connected to the network system, (detecting means to detect that a mobile device is in the neighborhood of the electronic beacon, when the electronic beacon is activated,) wherein upon detection that a mobile device and an electronic beacon are in each other's neighborhood (by the detecting means of the electronic beacon or by detecting means of the mobile device), a link of a print job selected on the mobile device is sent via the network system to the memory means of the electronic beacon upon activation of the electronic beacon, a link of a print job stored in the memory means of the electronic beacon is sent via the network system to the mobile device, and a link of a print job stored on the electronic beacon is deleted from the memory means of the electronic beacon upon deactivation of the electronic beacon, and wherein the electronic beacon is placed on top of or inserted in the physical intermediate product or a physical end product after the physical intermediate product respectively the physical end product is processed by a production module, and the electronic beacon is removed from the physical intermediate product before the physical intermediate product is processed by a next production module.

### Summary of the invention

It is an object of the present invention to alleviate the above mentioned problem. To this end, a first aspect of the present invention provides a printer for producing images, comprising
- a set of storage holders for housing consumables used for processing images, each storage holder provided with a detector for detecting a status of the storage holder;
- a proximity sensor arranged for measuring a distance from the printer to at least one wearable associated with an operator for maintaining a condition of the consumables present in the set of storage holders;
- a controller configured to select the operator based on the measured distance from the printer to the at least wearable, and to process the status of the each storage holder and to transmit, when the status of the at least one storage holder corresponds to a predetermined threshold, a signal to the wearable associated with the selected operator, the signal corresponding to a task for the operator to abolish the status of the storage holder,

wherein the printer comprises a timer configured for timing a duration of a period from a first time point at which the signal corresponding to the task for the operator to abolish the status of the storage holder is transmitted to the wearable associated with the selected operator, and wherein the controller is configured to compare the duration with a predetermined period corresponding to the task for the operator to abolish the status of the storage holder, and to transmit, when the duration of the period exceeds the predetermined period, a warning signal to the wearable associated with the selected operator,
wherein the controller is configured to record the duration of the period from the first time point to a second time point at which the proximity sensor measures that the wearable of the selected operator passes a predetermined minimum distance for a corresponding task,
a calculator is arranged for calculating an average duration of the period from the first time point to the second time point, and wherein the controller is configured to adapt the predetermined period according to the average duration of the period calculated by the calculator.

A second aspect of the present invention provides a method for producing images, using the printer according to the first aspect of the present invention, comprising the steps of:
- detecting, by the detector, a status of the each storage holder;
- measuring, by the proximity sensor, a distance from the printer to at least one wearable associated with an operator for maintaining a condition of the consumables present in the set of storage holders;
- selecting, by the controller, the operator based on the distance from the printer to the at least wearable,
- processing, by the controller, the status of the each storage holder, and
- transmitting, by the controller, when the status of at least one storage holder corresponds to a predetermined threshold, a signal to the wearable associated with the selected operator, the signal corresponding to a task for the operator to abolish the status of the storage holder,

wherein the printer comprises a timer,
the method further comprising the steps of:
   - the timer timing a duration of a period from a first time point at which the signal corresponding to the task for the operator to abolish the status of the storage holder being transmitted to the wearable associated with the selected operator,
      the controller comparing the duration with a predetermined period corresponding to the task for the operator to abolish the status of the storage holder,
   - when the duration of the period exceeds the predetermined period, transmitting a warning signal to the wearable associated with the selected operator,
   - the controller recording the duration of the period from the first time point to a second time point at which the proximity sensor measures that the wearable of the selected operator passes a predetermined minimum distance for a corresponding task,
   - a calculator comprised in the printer calculating an average duration of the period from the first time point to the second time point, and
   - the controller adapting the predetermined period according to the average duration of the period calculated by the calculator.

### Detailed description of the Invention

The first aspect of the present invention concerns a printer for producing images according to claim 1. In this way, an operator associating with the wearable may be assigned to a task to abolish the status of the storage holder corresponding to the predetermined threshold, the assignment being based on the distance the operator is locating from the printer for producing images, wherein the distance between the operator and the printer is measured by the proximity sensor. In case a plurality of operators is present within a network of a plurality of devices for producing images, the most suitable operator may be determined based on both the distance between the operator and the printer and on a list of tasks allocated to the operator.

The proximity sensor may actively track the positions of a device. In another embodiment the device actively determines its position and communicates this to the printer via detecting and measuring Wi-Fi points or by measuring a geomagnetic field.

The printer comprises a timer configured for timing a duration of a period from a first time point at which the signal corresponding to the task for the operator to abolish the status of the storage holder is transmitted to the wearable associated with the selected operator, and wherein the controller is configured to compare the duration with a predetermined period corresponding to the task for the operator to abolish the status of the storage holder, and to transmit, when the duration of the period exceeds the predetermined period corresponding to the task for the operator to abolish the status of the storage holder, a warning signal to the wearable associated with the selected operator. In this way, the operator being assigned to the task to abolish the status of the storage holder is kindly reminded to this task in case performing the task takes longer than the predetermined period. The signal may be provided as an acoustic signal, a visual signal or a vibration signal.

The controller is configured to record the duration of the period from a first time point, at which the signal corresponding to the task for the operator to abolish the status of the storage holder is transmitted to the wearable associated with the selected operator, to a second time point at which the proximity sensor measures that the wearable of the selected operator passes the predetermined minimum distance for a corresponding task, wherein a calculator is arranged for calculating an average duration of the period from the first time point to the second time point, and wherein the controller is configured to adapt the predetermined period according to the average duration of the period calculated by the calculator. In this way, the average duration of the period from the first time point to the second time point is continuously updated providing the controller information when to generate next time the warning signal to the wearable associated with the selected operator. For a shop owner the controller information may be useful as well as for optimization of operators as well as for retrieving where consumables are stored in a shop.

According to an embodiment, the controller is, upon transmitting the signal to the wearable, configured to retrieve, from the proximity sensor, a value corresponding to the distance from the printer to the at least one wearable associated with the operator, to determine whether the selected operator associated with the wearable is moving in a direction corresponding to the task for the operator to abolish the status of the storage holder, and, if the selected operator associated with the wearable is moving in a direction corresponding to the task for the operator to abolish the status of the storage holder, to register the selected operator as assigned to the task for abolishment of the status. In this way, the controller is capable of checking whether the selected operator initially assigned to the task to abolish the status of the storage holder corresponding to the predetermined threshold, is responding to the task so that the selected operator may be registered as the operator to abolish the status of the storage holder so that no other operator will act on this task.

According to an embodiment, the at least one storage holder is provided with a storage accessor to allow the at least one storage holder to be in a first position wherein the printer is in operation mode or in a second position wherein the printer is idle to allow for replenishing consumables associated with the at least one storage holder, wherein the controller is configured to control the storage accessor such that when the proximity sensor measures that the wearable of the selected operator passes the predetermined minimum distance, the controller sets the storing accessor from the first position to the second position so as to provide access to the storage accessor to replenish consumables associated with the at least one storage holder. In this way, the operator obtains free access to the storage holder to replenish the associated consumables without the need to provide an access to the storage holder while the operator may hold the consumables by means of two hands.

According to an embodiment, the storage holder comprises a storage holder closed position detector to detect whether the storage holder is in the first position, wherein the storage holder is configured to transmit a further signal to the controller that the storage holder is in the first position, and wherein the controller is configured to receive the further signal from the storage holder and to register that the task for abolishment of the status is done. In this way, the printer is capable to detect the position of the storage holder after the storage holder was moved to the second position to allow replenishment of the storage holder, and in case the storage holder is in the first position, to provide feedback to the operator that the task for abolishment of the status is done.

According to an embodiment, the signal comprises a work list determined by the controller to indicate on the wearable of the selected operator an instruction about the consumable to be replenished at the corresponding storage holder. In this way, the selected operator is instructed about at least the consumable to replenish and the storage holder of the printer for producing images.

According to an embodiment, the controller is configured to transmit a subsequent signal comprising the task on the work list is done and to remove the task from the work list on the wearable of the selected operator. In this way, the selected operator receives feedback that the consumable is replenished correctly and that the printer may continue producing images and, thus, the task is done.

According to an embodiment, the controller is configured to transmit a subsequent signal comprising the task on the work list is done and to generate a query on the wearable of the selected operator to allow acknowledgement of the task on the work list is done, and wherein the controller is configured to receive a further subsequent signal responsive to the query and to remove, if controller receives the further subsequent signal responsive to the query, the task from the work list on the wearable of the selected operator. In this way, the selected operator receives feedback that the consumable is replenished correctly and that the printer may continue producing images and that the operator may update the work list by confirmation to remove the task from the work list.

According to an embodiment, the proximity sensor is arranged to detect the wearable by means of a signal triangulation method, wherein the signals are transmitted via protocol through one of Bluetooth, Near Field Communication (NFC) means, WiFi beacons, iBeacons or the like. In this way, a wide variety of wearables may be connected to a network wherein the printer for producing images is locating.

The second aspect of the present invention concerns a method for producing images, using the printer according to the present invention, comprising the steps of:
- detecting a status of each storage holder by the corresponding detector;
- measuring, by the proximity sensor, a distance from the printer to at least one wearable associated with an operator for maintaining a condition of the consumables present in the set of storage holders;
- selecting, by the controller, the operator based on the distance from the printer to the at least wearable,
- checking whether or not a task is assigned to the operator and stored on the wearable associated with the operator to abolish the status of a storage holder of the set of storage holders,
- in case of a positive check,
- processing, by the controller, the status of each storage holder, and
- transmitting, by the controller, when the status of at least one storage holder corresponds to a predetermined threshold, a signal to the wearable associated with the selected operator, the signal corresponding to the task for the operator to abolish the status of the storage holder.

In this way, an operator associating with the wearable may be assigned to a task to abolish the status of the storage holder corresponding to the predetermined threshold, the assignment being based on the distance the operator is locating from the printer for producing images, wherein the distance between the operator and the printer is measured by the proximity sensor. In case a plurality of operators is present within a network of a plurality of devices for producing images, the most suitable operator may be determined based on both the distance between the operator and the printer and on a list of tasks allocated to the operator.

The printer comprises a timer configured for timing a duration of a period from a first time point at which the signal corresponding to the task for the operator to abolish the status of the storage holder is transmitted to the wearable associated with the selected operator, and wherein the controller is configured to compare the duration with a predetermined period corresponding to the task for the operator to abolish the status of the storage holder, and to transmit, when the duration of the period exceeds the predetermined period corresponding to the task for the operator to abolish the status of the storage holder, a warning signal to the wearable associated with the selected operator. In this way, the operator being assigned to the task to abolish the status of the storage holder is kindly reminded to this task in case performing the task takes longer than the predetermined period. The signal may be provided as an acoustic signal, a visual signal or a vibration signal.

The controller is configured to record the duration of the period from a first time point, at which the signal corresponding to the task for the operator to abolish the status of the storage holder is transmitted to the wearable associated with the selected operator, to a second time point at which the proximity sensor measures that the wearable of the selected operator passes the predetermined minimum distance for a corresponding task, wherein a calculator is arranged for calculating an average duration of the period from the first time point to the second time point, and wherein the controller is configured to adapt the predetermined period according to the average duration of the period calculated by the calculator. In this way, the average duration of the period from the first time point to the second time point is continuously updated providing the controller information when to generate next time the warning signal to the wearable associated with the selected operator. For a shop owner the controller information may be useful as well as for optimization of operators as well as for retrieving where consumables are stored in a shop.

According to an embodiment, the method comprises the steps of:
- retrieving, by the controller, upon transmitting the signal to the wearable, a value from the proximity sensor, the value corresponding to the distance, from the printer to the at least one wearable associated with the operator,
- determining whether the selected operator associated with the wearable is moving in a direction corresponding to the task for the operator to abolish the status of the storage holder, and, if the selected operator associated with the wearable is moving in a direction corresponding to the task for the operator to abolish the status of the storage holder, registering the selected operator as assigned to the task for abolishment of the status. In this way, the controller is capable of checking whether the selected operator initially assigned to the task to abolish the status of the storage holder corresponding to the predetermined threshold, is responding to the task so that the selected operator may be registered as the operator to abolish the status of the storage holder so that no other operator will act on this task.

According to an embodiment, the method comprises the step of:
- controlling the storage accessor of the at least one storage holder such that when the proximity sensor measures that the wearable of the selected operator passes the predetermined minimum distance, the controller forces the storing accessor to move the storage holder from a first position wherein the printer is in operation mode to a second position wherein the printer is idle to allow for replenishing consumables, so as to provide access to the storage accessor to replenish consumables. In this way, the operator obtains free access to the storage holder to replenish the associated consumables without the need to provide an access to the storage holder while the operator may hold the consumables by means of two hands.

According to an embodiment, the method comprises the steps of:
- detecting, by a storage holder closed position detector, whether the storage holder is in the first position,
- transmitting, by the storage holder, a further signal to the controller that the storage holder is in the first position, and
- receiving, by the controller, the further signal from the storage holder and
- registering, by the controller, that the task for abolishment of the status is done.

In this way, the printer is capable to detect the position of the storage holder after the storage holder was moved to the second position to allow replenishment of the storage holder, and in case the storage holder is in the first position, to register that the task for abolishment of the status is done.

According to an embodiment, the method comprises the step of transmitting, by the controller, to the wearable of the selected operator, the signal comprising a work list comprising at least one instruction about the consumable to be replenished at the corresponding storage holder. In this way, the selected operator is instructed about at least the consumable to replenish and the storage holder of the printer for producing images.

According to an embodiment, the method comprises the step of transmitting, by the storage holder, to the wearable of the selected operator, a subsequent signal comprising the task on the work list is done and removing the task from the work list on the wearable of the selected operator. In this way, the selected operator receives feedback that the consumable is replenished correctly and that the printer may continue producing images and, thus, the task is done.

According to an embodiment, the method comprises the steps of:
- transmitting, by the controller, to the wearable of the selected operator, a subsequent signal comprising the task on the work list is done and
- generating, by the controller, a query on the wearable of the selected operator to acknowledge the task on the work list is done,
- receiving, by the controller, from the wearable of the selected operator, a further subsequent signal responsive to the query, and
- removing the task from the work list on the wearable of the selected operator. In this way, the selected operator receives feedback that the consumable is replenished correctly and that the printer may continue producing images and that the operator may update the work list by confirmation to remove the task from the work list.

According to an embodiment, the method comprises the steps of:
- timing, by the timer, a duration of a period from a first time point at which the signal corresponding to the task for the operator to abolish the status of the storage holder is transmitted to the wearable associated with the selected operator, and
- comparing, by the controller, the duration with a predetermined period corresponding to the task for the operator to abolish the status of the storage holder, and
- transmitting, by the controller, a warning signal to the wearable associated with the selected operator to remind the operator to the task to abolish the status of the storage holder. In this way, the operator being assigned to the task to abolish the status of the storage holder is kindly reminded to this task in case performing the task takes longer than the predetermined period.

According to an embodiment, the method comprises the steps of:
- recording, by the controller, the duration of the period from a first time point, at which the signal corresponding to the task for the operator to abolish the status of the storage holder is transmitted to the wearable associated with the selected operator, to a second time point at which the proximity sensor measures that the wearable of the selected operator passes the predetermined minimum distance for performing a corresponding task,
- calculating, by a calculator, an average duration of the period from the first time point to the second time point, and
- adapting, by the controller, the predetermined period according to the average duration calculated by the calculator. In this way, the average duration of the period from the first time point to the second time point is continuously updated providing the controller information when generate next time the warning signal to the wearable associated with the selected operator.

The third aspect of the present invention concerns a computer program product embodied on a non-transitory computer-readable medium, comprising program code which, when executed on the controller of a printer according to the present invention, causes the printer to perform the steps of the method according to the present invention.

### Brief description of the drawings

The present invention will become more fully understood from the detailed description given herein below and the accompanying schematical drawings which are given by way of illustration only, and thus are not limitative of the present invention, and wherein:
Fig. 1 is a schematic view on a printer comprising a set of storage holders, the printer locating in a printer room environment;
Fig. 2 is a block diagram showing the components such as a controller and a print engine of a general printer to which the present invention may be applied; and
Fig. 3 and 4 are flow diagrams of the method according to the present invention.

### Detailed description of the drawings

The present invention will now be described with reference to the accompanying drawings, wherein the same reference numerals have been used to identify the same or similar elements throughout the several views.

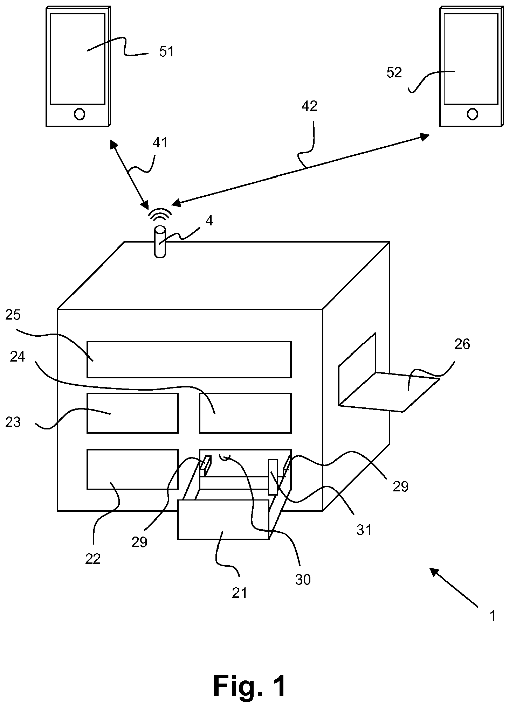

Fig. 1 is a schematic view of a printer 1 for producing images or a typical reprographic apparatus 1, such as a printer 1. The printer 1 is usually accommodated in a printer room environment having several printers. In such printer room, one or more operators are having the task to keep the printers running to which end the printers need to be maintained such as refilling ink or replacement of toners, solving paper jams, emptying waste bins, emptying output trays 26 and filling or refilling paper input trays.

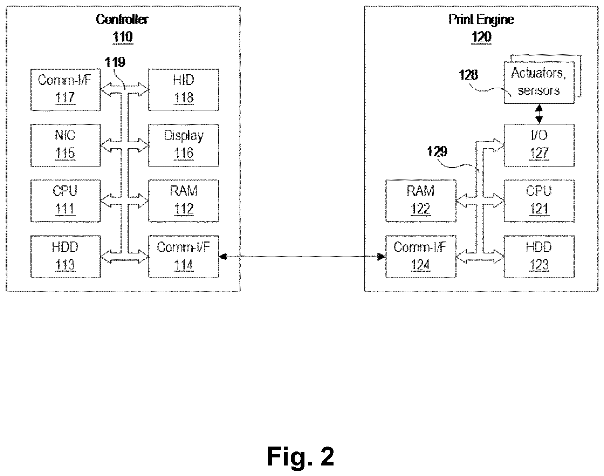

The printer 1 is usually equipped with a set of storage holders 21, 22, 23, 24, 25 for housing consumables to be used when printing images. The consumables may typically be a cartridge containing ink, a toner, a print media such as paper. A storage holder equipped with a detector 31 or media detector 31 is arranged to detect the status of the contents of the storage holder. As soon as the storage holder becomes empty or becomes nearly empty, the detector 31 detecting the corresponding storage holder being empty or nearly empty transmits a signal indicative of the status of the contents of the storage holder to a central processor 121 of a print engine 120 depicted in Fig. 2. In such cases, print engines 120 are arranged to transmit an alert in the form of a signal to the actuators 128, the signal for example being an acoustic signal and the actuator being a speaker, or alternatively, the signal being an information signal output to a visual display means 116 of the controller 110.

A typical reprographic apparatus such as a printer shown in Fig. 1 generally comprises the controller 110 and an engine 120. The engine 120 is responsible for low-level control of the apparatus. It deals with individual hardware components that are responsible for the reprographic process such as drives for media transport, media detectors 31, in the media path as well as in the input and output media trays, path switches, fusers, print heads, etc.; in general actuators and sensors 128. These actuators and sensors are connected through input/output (I/O) boards 127 to a bus 129. The bus 129 connects the major components in the engine 120. Actual data processing takes place in a central processor (CPU) 121.

The CPU 121 reads sensor values from the sensors 128 through the I/O 127. Based on these sensor values and other data such as print data and print commands received from the controller 110, the CPU 121 determines how the engine 120 should respond to this information and determines appropriate actuation values that are sent through the I/O 127 to the actuators 128. The engine 120 comprises a volatile memory such as a random access memory (RAM) 122 to temporarily store data for processing such as the print data and print commands received from the controller 110, and the sensor values read from the sensors 128.

Furthermore, a non-volatile memory such as a hard disk drive (HDD) 123 serves to store data in a more permanent manner, for example to survive a power down of the system. This hard disk drive 123 typically also stores embedded software comprising computer instructions that are run on the CPU 121. The engine 120 typically runs a real-time Operating System (RTOS), for example a soft real-time Operating System in order to deal with the time critical functions of controlling the actuators 128.

The engine 120 further comprises a communication device 124 to communicate with the controller 110. Typically, the engine 120 receives print data and print commands from the controller 110 and provides back status information on the engine 120 itself and on the processing of the print commands and print data, including sending error messages to the controller 110.

The controller 110 is connected to the engine 120 through a communication device 114 that communicates with the communication device 124 of the engine 120. These communication devices 114, 124 may be implemented as Ethernet network interface controllers (NIC). Processing in the controller 110 is done by a CPU 111 that is connected to all the other components in the controller 110 through a bus 119. The data to be processed is temporarily stored in a volatile memory such as RAM 112, while data is stored in a more permanent manner in a non-volatile memory such as hard disk drive 113, for example in order to survive power downs, but also to relieve the volatile memory 112 which typically has a smaller storage size. The hard disk drive 113 typically stores print jobs, each comprising print data and a job ticket. Furthermore, the hard disk drive 113 comprises converted print data which is print data converted to a format suitable for processing by the engine 120.

Typically the converted print data comprises raster images. Converting the print data in the print jobs to converted print data is typically done in a Raster Image Processor (RIP). Although the RIP may be a dedicated hardware device, it is common to be implemented in software and running on CPU 111. As the RIP-process is rather computationally intensive, it is common for controllers 110 to have multiple processors in the form of a multi-core CPU 111 or multiple CPUs 111. The controller 110 further comprises a display 116 to show messages to an operator, or display a complete graphical user interface (GUI) to an operator for operating the reprographic apparatus. The display 116 is supplemented by a human interface device (HID) 118 such as a keyboard, mouse, touchpad, stylus, or touch sensitive panel integrated into display 116, and allows the operator to operate the reprographic apparatus.

The controller 110 comprises a communication interface 117 for communicating with peripheral devices such as finisher, for example, stackers, staplers, binders, punchers, cutters, trimmers, folders, etc. The controller 110 further comprises a network interface card (NIC) 115 to connect the controller 110 to a computer network. Through the network connection, print jobs may be submitted to the controller 110 and the results of scan jobs may be retrieved from the controller 110. For these operations the controller 110 may be directly in communication with individual workstations, or indirectly through a print server. Furthermore, the network connection may be used to remotely operate the reprographic apparatus, monitor its status, and send production data to monitoring systems, accounting systems, or business information systems. Note that in smaller printer models, specifically printers suitable for placement on desks, it is common to use communication interfaces such as USB, FireWire, or Bluetooth instead of the NIC 115.

The controller 110 and the engine 120 may be implemented in a single printer device, typical for smaller printers for low volume printing, or as two separate, but interconnected devices, typical for larger, high-volume production printers.

The engine 120 typically deals with print data on a sheet level, swath level, or even line level. The engine 120 is typically not aware of information on a document or even job level. In contrast the controller 110 typically receives print jobs comprising one or more documents, the documents typically comprising multiple pages.

The detector 31 is comprised as one of the sensors 128 locating in the print engine 120, the detector 31 being connected through input/output (I/O) boards 127 via the bus 129 to the central processor (CPU) 121. The CPU 121 is capable to read sensor values from the detector 31 through the I/O 127, the sensor values for example being indicative of the status of the corresponding storage holder 21 - 25. The CPU 121 of the print engine 120 is connected to the CPU 111 of the controller 110 through the communication device 124 of the print engine 120 that communicates with the communication device 114 of the controller 110.

In case the detector 31 detects a sensor value corresponding to a status of the storage holder being run out of paper or almost run out of paper, the CPU 121 of the print engine 120 receives a signal from the detector 31 via the input/output (I/O) boards 127 and the bus 129. The CPU 121 of the print engine 120 communicating with the CPU 111 of the controller 110 causes the controller 110 to activate a proximity sensor 4 arranged on the printer 1 to sense a presence of operators for checking whether or what operators are around or near the printer 1 and to check whether or not at least one of the operators has assigned a task to resolve the status of the corresponding storage holder. The task in this case would comprise filling the storage holder with paper. To this end, the at least one operators are each equipped with a wearable 51, 52 which may be but is not limited to a mobile phone, a smart phone, a smart watch or smart glasses. The communication interface 117 of the controller 110 is further arranged for communicating with peripheral devices such as the wearables 51, 52 which are configured to receive alerts generated by the CPU 111 of the controller 110 to at least determine what operators are candidates for resolving the status of the storage holder of which the detector 31 have detected a sensor value exceeding a threshold value indicative of the status of the corresponding storage holder.

The controller 110 is configured to determine a distance 41, 42 between the proximity sensor 4 locating at the controller 110 and the each wearable 51, 52, wherein the controller 110 receives a signal from the sensor 4 via the input/output (I/O) boards 127 and the bus 129. The sensor 4 may be a proximity sensor to measure the distance 41, 42 based on signal triangulation through Bluetooth, Near Field Communication (NFC), Wi-Fi beacons or iBeacons.

In case more than one operator is related to maintaining the one or more printers 1, the controller 110 is capable of selecting the nearest wearable 51 or 52 with respect to the printer 1 that needs treatment and alerting the selected wearable 51 or 52. Alternatively, the controller 110 is capable of selecting the wearable 51 or 52 which is nearest to another position associated with the task or the instruction the operator needs to be dealt with. For example, the controller 110 is capable to select the operator nearest to a paper stock or paper supply in case the detector 31 of one of the printers 1 alerts about an empty or nearly empty paper storage holder. In case the detector 31 of one of the printers 1 alerts about a paper jam, the operator nearest to the relating printer 1 and having the appropriate task assigned to his task list or work list is alerted.

The controller 110 is arranged to transmit a message containing the task of the selected operator to the wearable 51, 52. When the controller 110 transmits the alert or message to the selected operator, the operator is able to acknowledge the alert after which the controller 110 assigns the operator corresponding to the wearable 51, 52 from which the alert or message is acknowledged to the task to resolve the status of the one storage holder.

The controller 110 may be configured so that when the task is assigned to the selected operator, the distance of the operator with respect to the printer 1 is continuously or intermittently determined by the proximity sensor so as to compare the route of the operator with the predetermined route of the operator corresponding to the task. In this way, the controller 110 is capable of checking whether the assigned operator is actually performing his task correctly. The controller 110 may be configured so that when the operator deviates from the predetermined route corresponding to his task, to generate a warning whether the selected operator is performing the task correctly or is having problems or, in case the controller 110 is capable of finding another operator being in a better position to deal with the task, to generate a message to dismiss the operator to the task and to assign the other operator to the task.

In case the CPU 111 determines that the operator assigned to the task reaches a predetermined minimum distance to the printer 1, the CPU 111 of the controller 110 communicating with the CPU 121 of the print engine 120 causes the print engine 120 to activate, by sending appropriate actuation values through the I/O 127 to a storage holder driver 29 arranged at the storage holder of the printer 1. The storage holder driver 29 is arranged to move the at least one storage holder from a first position wherein the printer is in operation mode to a second position wherein the printer 1 is idle and the storage holder is accessible to allow for replenishing or removing consumables associated with the at least one storage holder. From the moment at which the storage holder driver 29 opens the storage holder to be maintained, the operator obtains immediate access for maintaining the storage holder to be maintained. In case the storage holder is a paper storage holder, a refill of paper for the storage holder is facilitated since the operator carrying the stack of paper to be refilled may lay down the paper into the storage holder without the need of him to manual open the storage holder first.

When the operator has finished the task, the operator may close the storage holder maintained or refilled in a closed or stowed position again, for example by pushing the storage holder into the printer 1. The printer 1 is equipped with a storage closed position detector 30 to be able to indicate the CPU 121 of the print engine 120 to resume the present print job. Subsequently, the CPU 121 of the print engine 120 communicates with the communication device 114 of the controller 110 to remove the task from the task list of the operator and to communicate this via the communication interface 117 of the controller 110 to the relevant wearable 51, 52.

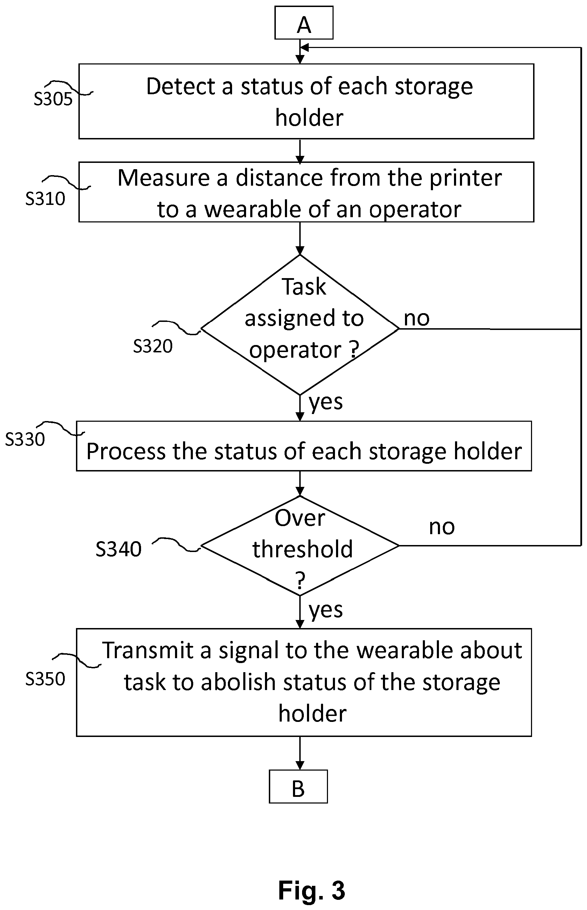

Fig. 3 is a flow diagram of an embodiment of the method according to the present invention. The method starts in starting point A and proceeds to a first step S305.

In the first step S305 a status of each storage holder is detected by the corresponding detector.

In a second step S310 the proximity sensor measures a distance from the printer to at least one wearable associated with an operator for maintaining a condition of the consumables present in the set of storage holders. The controller selects the operator based on the distance from the printer to the at least wearable.

In a third step S320 it is checked whether or not a task is assigned to the operator and stored on the wearable associated with the operator to abolish the status of a storage holder of the set of storage holders.

In case of a negative check, the method returns to the first step S305.

In case of a positive check, the method proceeds to a fourth step S330.

In the fourth step S330 the controller processes the status of each storage holder.

In a fifth step S340 it is checked whether the status of at least one storage holder corresponds to a predetermined threshold. If so, the method proceeds to a sixth step S350. If not so, the method returns to the first step S305.

In the sixth step S350 the controller transmits a signal to the wearable associated with the selected operator. The signal corresponds to the task for the operator to abolish the status of the storage holder.

The method ends in an end point B.

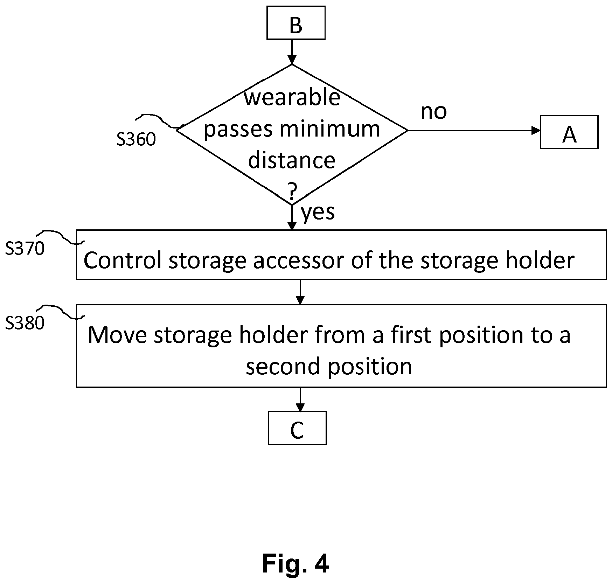

Fig. 4 shows a further embodiment of the method starting from end point B in Fig. 3 and 4.

In a seventh step S360 it is checked by the proximity sensor whether or not the wearable of the selected operator passes a predetermined minimum distance. If so, the method proceeds to an eighth step S380. If not so, the method returns to starting point A in Fig. 3.

In the eighth step S370 the storage accessor of the storage holder is controlled by the controller.

In a ninth step S380 the controller forces the storing accessor to move the storage holder from a first position wherein the printer is in operation mode to a second position wherein the printer is idle to allow for replenishing consumables, so as to provide access to the storage accessor to replenish consumables.

The method ends in an end point C.

It should be noted that the above-mentioned embodiments illustrate rather than limit the present invention, and that those skilled in the art will be able to design many alternative embodiments.

The present invention may be varied within the scope of the appending claims. For example, the CPU 121 locating at the print engine 120 may have the functions of the CPU 111 locating at the controller 110 and may be in connection directly with a communication interface integrated with the print engine 120 for communicating with peripheral devices such as finisher, for example, stackers, staplers, binders, punchers, cutters, trimmers, folders, and wearables 51, 52.

## Claims

1. A printer (1) for printing images, comprising
- a set of storage holders (21-25) for housing consumables used for printing images, each storage holder (21-25) provided with a detector (31) for detecting a status of the storage holder;
- a proximity sensor (4) arranged for measuring a distance (41, 42) from the printer (1) to at least one wearable (51, 52) associated with an operator for maintaining a condition of the consumables present in the set of storage holders (21-25);
- a controller (110) configured
to select the operator based on the measured distance (41, 42) from the printer (1) to the at least one wearable (51, 52),
to check whether or not a task is assigned to the operator to abolish the status of a storage holder of the set of storage holders (21-25), and
in case of a positive check, to process the status of the storage holder, and
to transmit, when the status of the storage holder corresponds to a predetermined threshold, a signal to the wearable (51, 52) associated with the selected operator, the signal corresponding to the task for the operator to abolish the status of the storage holder, wherein the printer (1) comprises a timer configured for timing a duration of a period from a first time point at which the signal corresponding to the task for the operator to abolish the status of the storage holder is transmitted to the wearable (51, 52) associated with the selected operator, and wherein the controller (110) is configured to compare the duration with a predetermined period corresponding to the task for the operator to abolish the status of the storage holder, and to transmit, when the duration of the period exceeds the predetermined period, a warning signal to the wearable (51, 52) associated with the selected operator,
wherein
the controller (110) is configured to record the duration of the period from the first time point to a second time point at which the proximity sensor (4) measures that the wearable (51, 52) of the selected operator passes a predetermined minimum distance (41, 42) for a corresponding task,
a calculator is arranged for calculating an average duration of the period from the first time point to the second time point, and wherein the controller (110) is configured to adapt the predetermined period according to the average duration of the period calculated by the calculator.

2. The printer (1) according to claim 1, wherein the controller (110) is, upon transmitting the signal to the wearable (51, 52), configured to retrieve, from the proximity sensor (4), a value corresponding to the distance (41, 42) from the printer (1) to the at least one wearable (51, 52) associated with the operator, to determine whether the selected operator associated with the wearable (51, 52) is moving in a direction corresponding to the task for the operator to abolish the status of the storage holder, and, if the selected operator associated with the wearable (51, 52) is moving in a direction corresponding to the task for the operator to abolish the status of the storage holder, to register the selected operator as assigned to the task for abolishment of the status.

3. The printer (1) according to claim 1 or 2, wherein the storage holder (21-25) is provided with a storage accessor to allow the storage holder (21-25) to be in a first position wherein the printer (1) is in operation mode or in a second position wherein the printer (1) is idle to allow for replenishing consumables associated with the particular storage holder (21-25), wherein the controller (110) is configured to control the storage accessor such that when the proximity sensor (4) measures that the wearable (51, 52) of the selected operator passes the predetermined minimum distance (41, 42), the controller (110) sets the storage holder (21-25) from the first position to the second position so as to provide access to the storage via the storage accessor to replenish consumables associated with the storage holder (21-25).

4. The printer (1) according to claim 3, wherein the storage holder (21-25) comprises a storage holder closed position detector (30) to detect whether the storage holder (21-25) is in the first position, wherein the storage holder (21-25) is configured to transmit a further signal to the controller (110) that the storage holder (21-25) is in the first position, and wherein the controller (110) is configured to receive the further signal from the storage holder (21-25) and to register that the task for abolishment of the status is done.

5. The printer (1) according to any one of the preceding claims, wherein the signal comprises a work list determined by the controller (110) to indicate on the wearable (51, 52) of the selected operator an instruction about the consumable to be replenished at the corresponding storage holder (21-25).

6. The printer (1) according to claim 4, wherein the signal comprises a work list determined by the controller (110) to indicate on the wearable (51, 52) of the selected operator an instruction about the consumable to be replenished at the corresponding storage holder (21-25), and
wherein the controller (110) is configured to transmit a subsequent signal comprising the task on the work list is done and to remove the task from the work list on the wearable (51, 52) of the selected operator.

7. The printer (1) according to claim 4, wherein the signal comprises a work list determined by the controller (110) to indicate on the wearable (51, 52) of the selected operator an instruction about the consumable to be replenished at the corresponding storage holder (21-25), and
wherein the controller (110) is configured to transmit a subsequent signal comprising the task on the work list is done and to generate a query on the wearable (51, 52) of the selected operator to allow acknowledgement of the task on the work list is done, and
wherein the controller (110) is configured to receive a further subsequent signal responsive to the query and to remove, if controller (110) receives the further subsequent signal responsive to the query, the task from the work list on the wearable (51, 52) of the selected operator.

8. The printer (1) according to any one of the preceding claims, wherein the proximity sensor (4) is arranged to detect the wearable (51, 52) by means of a signal triangulation method, wherein the signals are transmitted via protocol through one of Bluetooth, Near Field Communication, Wi-Fi beacons and iBeacons.

9. A method for producing images, using the printer (1) according to any one of the preceding claims 1-8, comprising the steps of:
- detecting a status of each storage holder by the corresponding detector (31);
- measuring, by the proximity sensor (4), a distance (41, 42) from the printer (1) to at least one wearable (51, 52) associated with an operator for maintaining a condition of the consumables present in the set of storage holders (21-25);
- selecting, by the controller (110), the operator based on the distance (41, 42) from the printer (1) to the at least wearable (51, 52),
- checking whether or not a task is assigned to the operator to abolish the status of a storage holder of the set of storage holders (21-25),
- in case of a positive check,
- processing, by the controller (110), the status of each storage holder, and
- transmitting, by the controller (110), when the status of at least one storage holder (21-25) corresponds to a predetermined threshold, a signal to the wearable (51, 52) associated with the selected operator, the signal corresponding to the task for the operator to abolish the status of the storage holder,
wherein the printer (1) comprises a timer,
the method further comprising the steps of:
the timer timing a duration of a period from a first time point at which the signal corresponding to the task for the operator to abolish the status of the storage holder being transmitted to the wearable (51, 52) associated with the selected operator,
the controller (110) comparing the duration with a predetermined period corresponding to the task for the operator to abolish the status of the storage holder,
when the duration of the period exceeds the predetermined period, transmitting a warning signal to the wearable (51, 52) associated with the selected operator,
the controller (110) recording the duration of the period from the first time point to a second time point at which the proximity sensor (4) measures that the wearable (51, 52) of the selected operator passes a predetermined minimum distance (41, 42) for a corresponding task,
a calculator comprised in the printer (1) calculating an average duration of the period from the first time point to the second time point, and
the controller (110) adapting the predetermined period according to the average duration of the period calculated by the calculator.

10. The method according to claim 9, comprising the steps of:
- retrieving, by the controller (110), upon transmitting the signal to the wearable (51, 52), a value from the proximity sensor (4), the value corresponding to the distance (41, 42), from the printer (1) to the at least one wearable (51, 52) associated with the operator,
- determining whether the selected operator associated with the wearable (51, 52) is moving in a direction corresponding to the task for the operator to abolish the status of the storage holder, and, if the selected operator associated with the wearable (51, 52) is moving in a direction corresponding to the task for the operator to abolish the status of the storage holder, registering the selected operator as assigned to the task for abolishment of the status.

11. The method according to claim 9 or 10, comprising the step of:
- controlling the storage accessor of the at least one storage holder (21-25) such that when the proximity sensor (4) measures that the wearable (51, 52) of the selected operator passes the predetermined minimum distance (41, 42), the controller (110) forces the storing accessor to move the storage holder (21-25) from a first position wherein the printer (1) is in operation mode to a second position wherein the printer (1) is idle to allow for replenishing consumables, so as to provide access to the storage accessor to replenish consumables.

12. The method according to claim 11, comprising the steps of:
- detecting, by a storage holder closed position detector (30), whether the storage holder (21-25) is in the first position,
- transmitting, by the storage holder (21-25), a further signal to the controller (110) that the storage holder (21-25) is in the first position, and
- receiving, by the controller (110), the further signal from the storage holder (21-25) and
- registering, by the controller (110), that the task for abolishment of the status is done.

13. The method according to anyone of the preceding claims 9 - 12, comprising the step of transmitting, by the controller (110), to the wearable (51, 52) of the selected operator, the signal comprising a work list comprising at least one instruction about the consumable to be replenished at the corresponding storage holder (21-25).

14. The method according to claim 12, comprising the steps of transmitting, by the controller (110), to the wearable (51, 52) of the selected operator, the signal comprising a work list comprising at least one instruction about the consumable to be replenished at the corresponding storage holder (21-25), transmitting, by the storage holder (21-25), to the wearable (51, 52) of the selected operator, a subsequent signal comprising the task on the work list is done, and removing the task from the work list on the wearable (51, 52) of the selected operator.

15. The method according to claim 12, comprising the steps of
transmitting, by the controller (110), to the wearable (51, 52) of the selected operator, the signal comprising a work list comprising at least one instruction about the consumable to be replenished at the corresponding storage holder (21-25),
transmitting, by the controller (110), to the wearable (51, 52) of the selected operator, a subsequent signal comprising the task on the work list is done,
generating, by the controller (110), a query on the wearable (51, 52) of the selected operator to acknowledge the task on the work list is done,
receiving, by the controller (110), from the wearable (51, 52) of the selected operator, a further subsequent signal responsive to the query, and
removing the task from the work list on the wearable (51, 52) of the selected operator.

16. A computer program product embodied on a non-transitory computer-readable medium, comprising program code which, when executed on the controller (110) of the printer (1) of any of claims 1-8, causes the printer (1) to perform the steps of the method according to any of the claims 9 to 15.

## Patentansprüche

1. Ein Drucker (1) zum Drucken von Bildern, umfassend:
- eine Menge von Lagerhaltern (21-25) zur Aufnahme von Verbrauchsmaterialien, die zum Drucken von Bildern verwendet werden, wobei jeder Lagerhalter (21-25) mit einem Detektor (31) zum Erfassen eines Status des Lagerhalters versehen ist;
- einen Näherungssensor (4), der so angeordnet ist, dass er einen Abstand (41, 42) misst vom Drucker (1) zu mindestens einem einem Bediener zugeordneten tragbaren Gerät (51, 52), um den Zustand der in der Menge von Lagerhaltern (21-25) vorhandenen Verbrauchsmaterialien zu erhalten;
- eine Steuerung (110), die konfiguriert ist um
den Bediener auf der Grundlage des gemessenen Abstands (41, 42) vom Drucker (1) zum mindestens einen tragbaren Gerät (51, 52) auszuwählen,
zu prüfen, ob dem Bediener eine Aufgabe zugewiesen wurde, um den Status eines Lagerhalters aus der Menge der Lagerhalter (21-25) aufzuheben, und
im Falle einer positiven Prüfung den Status des Lagerhalters zu verarbeiten, und
wenn der Status des Lagerhalters einem vorbestimmten Schwellenwert entspricht, ein Signal an das dem ausgewählten Bediener zugeordnete tragbare Gerät (51, 52) zu übertragen, wobei das Signal der Aufgabe für den Bediener entspricht, um den Status des Lagerhalters aufzuheben, wobei der Drucker (1) einen Zeitgeber umfasst, der konfiguriert ist, um eine Dauer einer Periode von einem ersten Zeitpunkt an zu messen, zu dem das Signal, das der Aufgabe für den Bediener, den Status des Lagerhalters aufzuheben, entspricht, an das tragbare Gerät (51, 52), das dem ausgewählten Bediener zugeordnet ist, übertragen wird, und wobei die Steuerung (110) so konfiguriert ist, dass sie die Dauer mit einer vorbestimmten Periode vergleicht, die der Aufgabe für den Bediener entspricht, den Status des Lagerhalters aufzuheben, und dass sie, wenn die Dauer der Periode die vorbestimmte Periode überschreitet, ein Warnsignal an das dem ausgewählten Bediener zugeordnete tragbare Gerät (51, 52) überträgt,
wobei
die Steuerung (110) so konfiguriert ist, dass sie die Dauer der Periode vom ersten Zeitpunkt bis zu einem zweiten Zeitpunkt aufzeichnet, zu dem der Näherungssensor (4) misst, dass das tragbare Gerät (51, 52) des ausgewählten Bedieners einen vorbestimmten Mindestabstand (41, 42) für eine entsprechende Aufgabe passiert,
ein Rechner angeordnet ist, um eine durchschnittliche Dauer der Periode vom ersten Zeitpunkt bis zum zweiten Zeitpunkt zu berechnen, und wobei die Steuerung (110) so konfiguriert ist, dass sie die vorbestimmte Periode entsprechend der vom Rechner berechneten durchschnittlichen Dauer der Periode anpasst.

2. Drucker (1) nach Anspruch 1, wobei die Steuerung (110) so konfiguriert ist, dass sie bei der Übertragung des Signals an das tragbare Gerät (51, 52) vom Näherungssensor (4) einen Wert abruft, der dem Abstand (41, 42) vom Drucker (1) zum mindestens einen tragbaren Gerät (51, 52) entspricht, das dem Bediener zugeordnet ist, um zu bestimmen, ob der ausgewählte Bediener, der dem tragbaren Gerät (51, 52) zugeordnet ist, sich in eine Richtung bewegt, die der Aufgabe für den Bediener entspricht, den Status des Lagerhalters aufzuheben, und, wenn sich der ausgewählte Bediener, der dem tragbaren Gerät (51, 52) zugeordnet ist, in eine Richtung bewegt, die der Aufgabe für den Bediener entspricht, den Status des Lagerhalters aufzuheben, den ausgewählten Bediener als der Aufgabe zur Aufhebung des Status zugewiesen zu registrieren.

3. Drucker (1) nach Anspruch 1 oder 2, wobei der Lagerhalter (21-25) mit einem Lagerzugangsmechanismus versehen ist, um zu ermöglichen, dass sich der Lagerhalter (21-25) in einer ersten Position befindet, in der sich der Drucker (1) im Betriebsmodus befindet, oder in einer zweiten Position, in der sich der Drucker (1) im Ruhelage befindet, um das Nachfüllen von Verbrauchsmaterialien zu ermöglichen, die dem bestimmten Lagerhalter (21-25) zugeordnet sind, wobei die Steuerung (110) so konfiguriert ist, dass sie den Lagerzugangsmechanismus so steuert, dass die Steuerung (110), wenn der Näherungssensor (4) misst, dass das tragbare Gerät (51, 52) des ausgewählten Bedieners den vorbestimmten Mindestabstand (41, 42) passiert, den Lagerhalter (21-25) von der ersten Position in die zweite Position bringt, um den Zugang zum Lager über den Lagerzugangsmechanismus zu ermöglichen, um dem Lagerhalter (21-25) zugeordnete Verbrauchsmaterialien nachzufüllen.

4. Drucker (1) nach Anspruch 3, wobei der Lagerhalter (21-25) einen Detektor (30) für die geschlossene Position des Lagerhalters umfasst, um zu erkennen, ob sich der Lagerhalter (21-25) in der ersten Position befindet, wobei der Lagerhalter (21-25) so konfiguriert ist, dass er ein weiteres Signal an die Steuerung (110) sendet, dass sich der Lagerhalter (21-25) in der ersten Position befindet, und wobei die Steuerung (110) so konfiguriert ist, dass sie das weitere Signal vom Lagerhalter (21-25) empfängt und registriert, dass die Aufgabe zur Aufhebung des Status erledigt ist.

5. Drucker (1) nach einem der vorhergehenden Ansprüche, wobei das Signal eine von der Steuerung (110) ermittelte Aufgabeliste umfasst, um auf dem tragbaren Gerät (51, 52) des ausgewählten Bedieners eine Anweisung über das Verbrauchsmaterial anzuzeigen, das im entsprechenden Lagerhalter (21-25) nachgefüllt werden soll.

6. Drucker (1) nach Anspruch 4, wobei das Signal eine von der Steuerung (110) ermittelte Aufgabeliste umfasst, um auf dem tragbaren Gerät (51, 52) des ausgewählten Bedieners eine Anweisung über das im entsprechenden Lagerhalter (21-25) nachzufüllende Verbrauchsmaterial anzuzeigen, und
wobei die Steuerung (110) so konfiguriert ist, dass sie ein nachfolgendes Signal sendet, das die Erledigung der Aufgabe auf der Aufgabeliste umfasst, und die Aufgabe aus der Aufgabeliste auf dem tragbaren Gerät (51, 52) des ausgewählten Bedieners entfernt.

7. Drucker (1) nach Anspruch 4, wobei das Signal eine von der Steuerung (110) ermittelte Aufgabeliste umfasst, um auf dem tragbaren Gerät (51, 52) des ausgewählten Bedieners eine Anweisung über das im entsprechenden Lagerhalter (21-25) nachzufüllende Verbrauchsmaterial anzuzeigen, und
wobei die Steuerung (110) so konfiguriert ist, dass sie ein nachfolgendes Signal sendet, das umfasst, dass die Aufgabe auf der Aufgabeliste erledigt ist, und dass sie eine Abfrage auf dem tragbaren Gerät (51, 52) des ausgewählten Bedieners erzeugt, um eine Bestätigung zu ermöglichen, dass die Aufgabe auf der Aufgabeliste erledigt ist, und
wobei die Steuerung (110) so konfiguriert ist, dass sie ein weiteres nachfolgendes Signal als Reaktion auf die Abfrage empfängt, und die Aufgabe aus der Aufgabeliste auf dem tragbaren Gerät (51, 52) des ausgewählten Bedieners entfernt, wenn die Steuerung (110) das weitere nachfolgende Signal als Reaktion auf die Abfrage empfängt.

8. Drucker (1) nach einem der vorhergehenden Ansprüche, wobei der Näherungssensor (4) so angeordnet ist, dass er das tragbare Gerät (51, 52) mittels eines Signaltriangulationsverfahrens erkennt, wobei die Signale übertragen werden über ein Protokoll wie eines der folgenden: Bluetooth, Near Field Communication, Wi-Fi Beacons und iBeacons.

9. Verfahren zum Erzeugen von Bildern unter Verwendung des Druckers (1) nach einem der vorhergehenden Ansprüche 1-8, das die folgenden Schritte umfasst:
- Erfassen eines Status jedes Lagerhalters durch den entsprechenden Detektor (31);
- Messen, durch den Näherungssensor (4), eines Abstands (41, 42) vom Drucker (1) zu mindestens einem tragbaren Gerät (51, 52), das einem Bediener zugeordnet ist um den Zustand der in der Menge Lagerhaltern (21-25) vorhandenen Verbrauchsmaterialien zu erfassen;
- Auswählen des Bedieners durch die Steuerung (110) auf der Grundlage des Abstands (41, 42) vom Drucker (1) zum zumindest einen tragbaren Gerät (51, 52),
- Prüfen, ob dem Bediener eine Aufgabe zur Aufhebung des Status eines Lagerhalters aus der Menge der Lagerhalter (21-25) zugewiesen wurde oder nicht,
- im Falle einer positiven Prüfung,
- Verarbeiten des Status jedes Lagerhalters durch die Steuerung (110), und
- Übertragen eines Signals an das dem ausgewählten Bediener zugeordnete tragbare Gerät (51, 52) durch die Steuerung (110), wenn der Status mindestens eines Lagerhalters (21-25) einem vorbestimmten Schwellenwert entspricht, wobei das Signal dem Aufgabe an den Bediener entspricht, den Status des Lagerhalters aufzuheben,
wobei der Drucker (1) einen Zeitgeber umfasst,
wobei das Verfahren weiterhin die folgenden Schritte umfasst:
vom Zeitgeber Anmessen der Dauer einer Periode von einem ersten Zeitpunkt, zu dem das Signal, das der Aufgabe für den Bediener entspricht, den Status des Lagerhalters aufzuheben, an das dem ausgewählten Bediener zugeordnete tragbare Gerät (51, 52) übertragen wird,
durch die Steuerung (110) Vergleichen die Dauer mit einer vorbestimmten Periode, die der Aufgabe für den Bediener entspricht, den Status des Lagerhalters aufzuheben,
wenn die Dauer der Periode die vorbestimmte Periode überschreitet, Senden eines Warnsignal an das dem ausgewählten Bediener zugeordnete tragbare Gerät (51, 52),
durch die Steuerung (110) Aufzeichnen der Dauer der Periode vom ersten Zeitpunkt bis zu einem zweiten Zeitpunkt, zu dem der Näherungssensor (4) misst, dass das tragbare Gerät (51, 52) des ausgewählten Bedieners einen vorbestimmten Mindestabstand (41, 42) für eine entsprechende Aufgabe passiert,
durch einen Rechner im Drucker (1) Berechnen einer durchschnittliche Dauer der Periode vom ersten Zeitpunkt bis zum zweiten Zeitpunkt, und
durch die Steuerung (110) Anpassen der vorgegebenen Periode entsprechend der vom Rechner berechneten durchschnittlichen Dauer der Periode.

10. Verfahren nach Anspruch 9, das die folgenden Schritte umfasst:
- wenn das Signal an das tragbare Gerät (51, 52) übertragen wird, durch die Steuerung (110) Abrufen eines Wertes vom Näherungssensor (4), der dem Abstand (41, 42) vom Drucker (1) zum mindestens einen, dem Bediener zugeordneten, tragbaren Gerät (51, 52) entspricht,
- Bestimmen, ob der ausgewählte Bediener, der dem tragbaren Gerät (51, 52) zugeordnet ist, sich in eine Richtung bewegt, die der Aufgabe für den Bediener entspricht, den Status des Lagerhalters aufzuheben, und, wenn der ausgewählte Bediener, der dem tragbaren Gerät (51, 52) zugeordnet ist, sich in eine Richtung bewegt, die der Aufgabe für den Bediener entspricht, den Status des Lagerhalters aufzuheben, Registrieren des ausgewählten Bediener als der Aufgabe zur Aufhebung des Status zugewiesen.

11. Verfahren nach Anspruch 9 oder 10, umfassend den Schritt:
- Steuern des Lagerzugangsmechanismus des mindestens einen Lagerhalters (21-25) so, dass, wenn der Näherungssensor (4) misst, dass das tragbare Gerät (51, 52) des ausgewählten Bedieners den vorbestimmten Mindestabstand (41, 42) passiert, die Steuerung (110) den Lagerzugangsmechanismus zwingt, den Lagerhalter (21-25) von einer ersten Position, in der sich der Drucker (1) im Betriebsmodus befindet, in eine zweite Position zu bewegen, in der sich der Drucker (1) in einer Ruhelage befindet, um das Nachfüllen von Verbrauchsmaterialien zu ermöglichen, um so das Zugang auf das Lagerzugangsmechanismus zum Nachfüllen von Verbrauchsmaterialien zu ermöglichen.

12. Verfahren nach Anspruch 11, das die folgenden Schritte umfasst:
- Erkennen, durch einen Detektor (30) für die geschlossene Position des Lagerhalters, ob sich der Lagerhalter (21-25) in der ersten Position befindet,
- Senden eines weiteren Signals durch den Lagerhalter (21-25) an die Steuerung (110), dass sich der Lagerhalter (21-25) in der ersten Position befindet, und
- Empfangen des weiteren Signals vom Lagerhalter (21-25) durch die Steuerung (110) und
- Registrieren durch die Steuerung (110), dass die Aufgabe zur Aufhebung des Status erledigt ist.

13. Verfahren nach einem der vorhergehenden Ansprüche 9-12, das den schritt umfasst, dass die Steuerung (110) an das tragbare Gerät (51, 52) des ausgewählten Bedieners das Signal sendet, das eine Aufgabeliste umfasst, die mindestens eine Anweisung über das nachzufüllende Verbrauchsmaterial im entsprechenden Lagerhalter (21-25) enthält.

14. Verfahren nach Anspruch 12, das die folgenden Schritte umfasst:
Übertragen, durch die Steuerung (110), an das tragbare Gerät (51, 52) des ausgewählten Bedieners, des Signals, das eine Aufgabeliste umfasst, die mindestens eine Anweisung über das nachzufüllende Verbrauchsmaterial in dem entsprechenden Lagerhalter (21-25) enthält,
Übertragen, durch den Lagerhalter (21-25) an das tragbare Gerät (51, 52) des ausgewählten Bedieners, eines nachfolgenden Signals, das die Erledigung der Aufgabe auf der Aufgabeliste umfasst, und Entfernen der Aufgabe aus der Aufgabeliste auf dem tragbaren Gerät (51, 52) des ausgewählten Bedieners.

15. Verfahren nach Anspruch 12, das die folgenden Schritte umfasst:
Übertragen, durch die Steuerung (110) an das tragbare Gerät (51, 52) des ausgewählten Bedieners, des Signals, das eine Aufgabeliste enthält, die mindestens eine Anweisung über das nachzufüllende Verbrauchsmaterial in dem entsprechenden Lagerhalter (21-25),
- Übertragen, durch die Steuerung (110) an das tragbare Gerät (51, 52) des ausgewählten Bedieners, eines nachfolgenden Signals, das die Erledigung der Aufgabe auf der Aufgabeliste umfasst,
Erzeugen, durch die Steuerung (110), einer Abfrage auf dem tragbare Gerät (51, 52) des ausgewählten Bedieners, um zu bestätigen, dass die Aufgabe auf der Aufgabeliste erledigt ist,
Empfangen, durch die Steuerung (110) vom tragbaren Gerät (51, 52) des ausgewählten Bedieners, eines weiteren nachfolgenden Signals als Reaktion auf die Abfrage, und
Entfernen der Aufgabe aus der Aufgabeliste auf dem tragbaren Gerät (51, 52) des ausgewählten Bedieners.

16. Computerprogrammprodukt, das auf einem nichtflüchtigen computerlesbaren Medium verkörpert ist, umfassend Programmcode, der, wenn er auf der Steuerung (110) des Druckers (1) nach einem der Ansprüche 1-8 ausgeführt wird, den Drucker (1) veranlasst, die Schritte des Verfahrens nach einem der Ansprüche 9 bis 15 auszuführen.

## Revendications

1. Imprimante (1) pour l'impression d'images, comprenant
- un ensemble de supports de stockage (21-25) pour loger des consommables utilisés pour l'impression d'images, chaque support de stockage (21-25) étant équipé d'un détecteur (31) pour détecter un état du support de stockage ;
- un capteur de proximité (4) agencé pour mesurer une distance (41, 42) entre l'imprimante (1) et au moins un appareil portable (51, 52) associé à un opérateur pour maintenir un état des consommables présents dans l'ensemble de supports de stockage (21-25) ;
- un dispositif de commande (110) configuré
pour sélectionner l'opérateur en fonction de la distance mesurée (41, 42) entre l'imprimante (1) et au moins un appareil portable (51, 52),
pour vérifier si une tâche est assignée ou non à l'opérateur pour abolir l'état d'un support de stockage de l'ensemble de supports de stockage (21-25), et
en cas de contrôle positif, traiter l'état du support de stockage, et
transmettre, lorsque l'état du support de stockage correspond à un seuil prédéterminé, un signal au dispositif portable (51, 52) associé à l'opérateur sélectionné, le signal correspondant à la tâche pour l'opérateur de abolir l'état du support de stockage, dans laquelle l'imprimante (1) comprend une minuterie configurée pour chronométrer une durée d'une période à partir d'un premier moment où le signal correspondant à la tâche pour l'opérateur d'abolition l'état du support de stockage est transmis au dispositif portable (51, 52) associé à l'opérateur sélectionné, et dans laquelle le dispositif de commande (110) est configuré pour comparer la durée à une période prédéterminée correspondant à la tâche pour l'opérateur d'abolition de l'état du support de stockage, et transmettre, lorsque la durée de la période dépasse la période prédéterminée, un signal d'avertissement au dispositif portable (51, 52) associé à l'opérateur sélectionné,
dans laquelle
le dispositif de commande (110) est configuré pour enregistrer la durée de la période entre le premier moment et le deuxième moment où le capteur de proximité (4) mesure que l'appareil portable (51, 52) de l'opérateur sélectionné passe une distance minimale prédéterminée (41, 42) pour une tâche correspondante,
un calculateur est prévu pour calculer une durée moyenne de la période entre le premier moment et le deuxième moment, et dans laquelle le dispositif de commande (110) est configuré pour adapter la période prédéterminée en fonction de la durée moyenne de la période calculée par le calculateur.

2. Imprimante (1) selon la revendication 1, dans laquelle le dispositif de commande (110) est, lors de la transmission du signal au appareil portable (51, 52), configuré pour récupérer, à partir du capteur de proximité (4), une valeur correspondant à la distance (41, 42) entre l'imprimante (1) et le au moins un appareil portable (51, 52) associé à l'opérateur, pour déterminer si l'opérateur sélectionné associé au appareil portable (51, 52) se déplace dans une direction correspondant à la tâche pour l'opérateur d'abolition de l'état du support de stockage, et, si l'opérateur sélectionné associé au appareil portable (51, 52) se déplace dans une direction correspondant à la tâche pour l'opérateur d'abolition de l'état du support de stockage, pour enregistrer l'opérateur sélectionné comme étant affecté à la tâche d'abolition de l'état.

3. Imprimante (1) selon la revendication 1 ou 2, dans laquelle le support de stockage (21-25) est pourvu d'un mécanisme d'accès de stockage pour permettre au support de stockage (21-25) d'être dans une première position dans laquelle l'imprimante (1) est en mode de fonctionnement ou dans une deuxième position dans laquelle l'imprimante (1) est au repos pour permettre le réapprovisionnement des consommables associés au support de stockage particulier (21-25), dans laquelle le dispositif de commande (110) est configuré pour contrôler le mécanisme d'accès de stockage de sorte que lorsque le capteur de proximité (4) mesure que l'appareil portable (51, 52) de l'opérateur sélectionné passe la distance minimale prédéterminée (41, 42), le dispositif de commande (110) place le support de stockage (21-25) de la première position à la deuxième position de manière à permettre l'accès au stockage via le mécanisme d'accès de stockage pour réapprovisionner les consommables associés au support de stockage (21-25).

4. Imprimante (1) selon la revendication 3, dans laquelle le support de stockage (21-25) comprend un détecteur de position fermée du support de stockage (30) pour détecter si le support de stockage (21-25) est dans la première position, dans laquelle le support de stockage (21-25) est configuré pour transmettre un signal supplémentaire au dispositif de commande (110) que le support de stockage (21-25) est dans la première position, et dans laquelle le dispositif de commande (110) est configuré pour recevoir le signal supplémentaire du support de stockage (21-25) et pour enregistrer que la tâche d'abolition de l'état est accomplie.

5. Imprimante (1) selon l'une quelconque des revendications précédentes, dans laquelle le signal comprend une liste de travail déterminée par le dispositif de commande (110) pour indiquer sur l'appareil portable (51, 52) de l'opérateur sélectionné une instruction sur le consommable à réapprovisionner dans le support de stockage correspondant (21-25).

6. Imprimante (1) selon la revendication 4, dans laquelle le signal comprend une liste de travail déterminée par le dispositif de commande (110) pour indiquer sur l'appareil portable (51, 52) de l'opérateur sélectionné une instruction sur le consommable à réapprovisionner dans le support de stockage correspondant (21-25), et
dans laquelle le dispositif de commande (110) est configuré pour transmettre un signal ultérieur indiquant que la tâche sur la liste de travail est accomplie, et pour abolir la tâche de la liste de travail sur l'appareil portable (51, 52) de l'opérateur sélectionné.

7. Imprimante (1) selon la revendication 4, dans laquelle le signal comprend une liste de travail déterminée par le dispositif de commande (110) pour indiquer sur l'appareil portable (51, 52) de l'opérateur sélectionné une instruction sur le consommable à réapprovisionner dans le support de stockage correspondant (21-25), et
dans laquelle le dispositif de commande (110) est configuré pour transmettre un signal ultérieur indiquant que la tâche sur la liste de travail est accomplie, et pour générer une requête sur l'appareil portable (51, 52) de l'opérateur sélectionné afin de permettre confirmation que la tâche sur la liste de travail est effectuée, et
dans laquelle le dispositif de commande (110) est configuré pour recevoir un autre signal ultérieur en réponse à la requête, et pour retirer, si le dispositif de commande (110) reçoit l'autre signal ultérieur en réponse à la requête, la tâche de la liste de travail sur l'appareil portable (51, 52) de l'opérateur sélectionné.

8. Imprimante (1) selon l'une quelconque des revendications précédentes, dans laquelle le capteur de proximité (4) est agencé pour détecter l'appareil portable (51, 52) au moyen d'une méthode de triangulation de signaux, dans laquelle les signaux sont transmis via un protocole parmi Bluetooth, Near Field Communication, Wi-Fi beacons et iBeacons.

9. Procédé de production d'images, utilisant l'imprimante (1) selon l'une quelconque des revendications précédentes 1-8, comprenant les étapes suivantes :
- détecter un état de chaque support de stockage par le détecteur correspondant (31) ;
- mesurer, par le capteur de proximité (4), une distance (41, 42) entre l'imprimante (1) et au moins un appareil portable (51, 52) associé à un opérateur pour maintenir un état des consommables présents dans l'ensemble de supports de stockage (21-25) ;
- sélectionner, par le dispositif de commande (110), l'opérateur en fonction de la distance (41, 42) entre l'imprimante (1) et le au moins un appareil portable (51, 52),
- vérifier si une tâche est assignée ou non à l'opérateur pour abolir l'état d'un support de stockage de l'ensemble de supports de stockage (21-25),
- en cas de contrôle positif,
- traitement, par le dispositif de commande (110), de l'état de chaque support de stockage, et
- transmettre, par le dispositif de commande (110), lorsque l'état d'au moins un support de stockage (21-25) correspond à un seuil prédéterminé, un signal au appareil portable (51, 52) associé à l'opérateur sélectionné, le signal correspondant à la tâche pour l'opérateur d'abolir l'état du support de stockage,
dans lequel l'imprimante (1) comprend une minuterie,
le procédé comprenant en outre les étapes suivantes :
la minuterie chronomètre une durée d'une période à partir d'un premier moment où le signal correspondant à la tâche pour l'opérateur d'abolir l'état du support de stockage est transmis au dispositif portable (51, 52) associé à l'opérateur sélectionné,
le dispositif de commande (110) compare la durée à une période prédéterminée correspondant à la tâche pour l'opérateur d'abolir l'état du support de stockage,
lorsque la durée de la période dépasse la période prédéterminée, transmettre un signal d'avertissement au appareil portable (51, 52) associé à l'opérateur sélectionné,
le dispositif de commande (110) enregistre la durée de la période entre le premier moment et le deuxième moment où le capteur de proximité (4) mesure que l'appareil portable (51, 52) de l'opérateur sélectionné passe une distance minimale prédéterminée (41, 42) pour une tâche correspondante,
un calculateur compris dans l'imprimante (1) calculant une durée moyenne de la période allant du premier moment au deuxième moment, et
le dispositif de commande (110) adapte la période prédéterminée en fonction de la durée moyenne de la période calculée par le calculateur.

10. Procédé selon la revendication 9, comprenant les étapes suivantes :
- récupérer, par le dispositif de commande (110), lors de la transmission du signal au appareil portable (51, 52), d'une valeur provenant du capteur de proximité (4), la valeur correspondant à la distance (41, 42) entre l'imprimante (1) et le au moins un appareil portable (51, 52) associé à l'opérateur,
- déterminer si l'opérateur sélectionné associé au appareil portable (51, 52) se déplace dans une direction correspondant à la tâche pour l'opérateur d'abolition de l'état du support de stockage, et, si l'opérateur sélectionné associé au appareil portable (51, 52) se déplace dans une direction correspondant à la tâche pour l'opérateur d'abolition de l'état du support de stockage, enregistrer l'opérateur sélectionné comme étant affecté à la tâche d'abolition de l'état.

11. Procédé selon la revendication 9 ou 10, comprenant l'étape de :
- commander le mécanisme d'accès de stockage du au moins un support de stockage (21-25) de sorte que lorsque le capteur de proximité (4) mesure que l'appareil portable (51, 52) de l'opérateur sélectionné passe la distance minimale prédéterminée (41, 42), le dispositif de commande (110) force le mécanisme d'accès de stockage à déplacer le support de stockage (21-25) d'une première position dans laquelle l'imprimante (1) est en mode de fonctionnement à une deuxième position dans laquelle l'imprimante (1) est inactive pour permettre le réapprovisionnement des consommables, de manière à donner accès à le mécanisme d'accès de stockage pour réapprovisionner les consommables.

12. Procédé selon la revendication 11, comprenant les étapes suivantes :
- détecter, par un détecteur de position fermée du support de stockage (30), si le support de stockage (21-25) est dans la première position,
- transmettre, par le support de stockage (21-25), un signal supplémentaire au dispositif de commande (110) indiquant que le support de stockage (21-25) est dans la première position, et
- recevoir, par le dispositif de commande (110), le signal supplémentaire provenant du support de stockage (21-25), et
- enregistrer, par le dispositif de commande (110), l'accomplissement de la tâche d'abolition de l'état.

13. Procédé selon l'une quelconque des revendications précédentes 9-12, comprenant l'étape de transmission, par le dispositif de commande (110), au appareil portable (51, 52) de l'opérateur sélectionné, le signal comprenant une liste de travail comprenant au moins une instruction sur le consommable à réapprovisionner dans le support de stockage correspondant (21-25).

14. Procédé selon la revendication 12, comprenant les étapes suivantes :
transmettre, par le dispositif de commande (110), au appareil portable (51, 52) de l'opérateur sélectionné, le signal comprenant une liste de travail comprenant au moins une instruction sur le consommable à réapprovisionner dans le support de stockage correspondant (21-25),
transmettre, par le support de stockage (21-25), au appareil portable (51, 52) de l'opérateur sélectionné, un signal ultérieur indiquant que la tâche sur la liste de travail est accomplie, et abolir la tâche de la liste de travail sur l'appareil portable (51, 52) de l'opérateur sélectionné.

15. Procédé selon la revendication 12, comprenant les étapes suivantes :
transmettre, par le dispositif de commande (110), au appareil portable (51, 52) de l'opérateur sélectionné, le signal comprenant une liste de travail comprenant au moins une instruction sur le consommable à réapprovisionner dans le support de stockage correspondant (21-25),
transmettre, par le dispositif de commande (110), au appareil portable (51, 52) de l'opérateur sélectionné, un signal ultérieur indiquant que la tâche sur la liste de travail est accomplie,
la génération, par le dispositif de commande (110), d'une requête sur l'appareil portable (51, 52) de l'opérateur sélectionné pour confirmer de la tâche sur la liste de travail est effectuée,
réception, par le dispositif de commande (110), du appareil portable (51, 52) de l'opérateur sélectionné, un autre signal ultérieur en réponse à la requête, et
retirer la tâche de la liste de travail sur l'appareil portable (51, 52) de l'opérateur sélectionné.

16. Produit de programme informatique incorporé sur un support non transitoire lisible par ordinateur, comprenant un code de programme qui, lorsqu'il est exécuté sur le dispositif de commande (110) de l'imprimante (1) de l'une quelconque des revendications 1-8, amène l'imprimante (1) à exécuter les étapes du procédé selon l'une quelconque des revendications 9-15.
